# EUROPÄISCHE PATENTSCHRIFT

(11) **EP 2 132 861 B1**
(45) Veröffentlichungstag und Bekanntmachung des Hinweises auf die Patenterteilung: **21.11.2018**
(21) Anmeldenummer: 08707695.6
(22) Anmeldetag: 13.02.2008
(51) Int. Cl.: H02K 11/215, H02K 9/14

(54) **ELEKTROMOTOR**
ELECTRIC MOTOR
MOTEUR ÉLECTRIQUE

(30) Priorität: 28.02.2007 DE 102007010106
(43) Veröffentlichungstag der Anmeldung: 16.12.2009
(73) Patentinhaber: SEW-EURODRIVE GmbH & Co. KG, 76646 Bruchsal (DE)
(72) Erfinder: PFANN, Jochen, 76189 Karlsruhe (DE); SIMON, Olaf, 76646 Bruchsal (DE); QUADT, Steffen, 76139 Karlsruhe (DE)
(86) Internationale Anmeldenummer: PCT/EP2008/001083
(87) Internationale Veröffentlichungsnummer: WO 2008/104274

(56) Entgegenhaltungen:
- EP-A- 1 511 157
- EP-A- 1 589 641
- WO-A-2006/136585
- US-A1- 2004 090 132

## Beschreibung

Die Erfindung betrifft einen Elektromotor.

Aus der DE 103 40 325 A1 ist ein Elektromotor bekannt, bei dem Sensoren mit einem am Lüfter vorgesehenen Ring abwechselnder Magnetisierung zusammenwirken zur Drehzahlbestimmung.

Aus der EP 1 511 157 A2 ist ein Elektromotor, umfassend eine Bremse und einen Lüfter, bekannt,
wobei der Lüfter einen Grundkörper und darauf vorgesehene Lüfterflügel und wobei der Lüfter einstückig als Spritzgussteil ausgeführt ist und am Lüfter Dauermagnete vorgesehen sind,
wobei axial beabstandet vom Lüfter eine elektronische Schaltung vorgesehen ist, die Sensoren umfasst, welche in Wirkverbindung mit den Magneten stehen, wobei die Sensoren das Magnetfeld der sich vorbei bewegenden Magnete detektieren,
wobei der Lüfter auf der Motorwelle mittels seiner Wellenaufnahme kraft- und/oder formschlüssig verbunden ist.

Aus der EP 1 511 157 A2 ist als nächstliegender Stand der Technik ein Lüftermotor bekannt, bei dem auf dem Lüfter ein Polring angeordnet ist und im axialen Bereich des Lüfters eine elektronischen Schaltung, die Sensoren zur Erfassung der vom Polring erzeugten Magnetfelder aufweist.

Aus der WO 2006/136585 A1 ist ein Lüfter bekannt, bei dem Magnete von einem Rückschlussring gehalten sind und an ihrer restlichen Oberfläche mit Kunststoff umspritzt sind.

Aus der EP 1 589 641 A2 ist ein Gleichstrommotor bekannt.

Der Erfindung liegt daher die Aufgabe zugrunde, einen Elektromotor mit Winkelbezogener Messwerterfassung weiterzubilden, wobei die Herstellung vereinfacht und kostengünstig sein soll.

Erfindungsgemäß wird die Aufgabe bei dem Elektromotor nach den in Anspruch 1 angegebenen Merkmalen gelöst.

Von Vorteil ist dabei, dass der Lüfter sehr kostengünstig und einfach herstellbar ist als gleichzeitiger Winkellagengeber.

Erfindungsgemäß sind die Dauermagnete derart nahe an der Oberfläche des Grundkörpers angeordnet, dass die Magnete im Grundkörper auch beim Betreiben des Motors gehalten sind. Von Vorteil ist dabei, dass die Magnete sehr starke Signale abgeben und somit bei naher Anordnung der Sensoren an dem beschriebenen Oberflächenbereich eine sehr gutes Signal-Rauschverhältnis erreichbar ist.

Erfindungsgemäß ist axial beabstandet vom Lüfter eine elektronische Schaltung vorgesehen, die Sensoren umfasst, welche in Wirkverbindung mit den Magneten stehen, wobei die Sensoren das Magnetfeld der sich vorbei bewegenden Magnete detektieren. Von Vorteil ist dabei, dass die Sensoren mit der Schaltung integriert auf einer Leiterplatte ausführbar sind und somit direkt die Sensorsignale auswertbar sind. Auf diese Weise ist dann die Information erzeugbar. Als Sensoren sind auch Kombinationen von Wiegandsensoren mit Hallsensoren vorteilhaft.

Erfindungsgemäß umfasst der Elektromotor eine Bremse und einen Lüfter, wobei der Lüfter, umfassend Grundkörper und darauf vorgesehene Lüfterflügel, einstückig als Spritzgussteil ausgeführt ist und im Lüfter Dauermagnete umspritzt vorgesehen sind, wobei axial beabstandet vom Lüfter eine elektronische Schaltung vorgesehen ist, die bevorzugt mittels Haltemitteln am Motorflansch befestigt ist, der mit dem Statorgehäuse des Motors verbunden ist.

Von Vorteil ist dabei, dass die Magnete schon bei der Herstellung des Spritzgusses des Lüfters eingebracht werden und somit der Lüfter in einfacher Weise herstellbar, die Magnete schützbar und durch Wahl der Magnete als Dauermagnete sehr starke Magnetfelder erzeugbar sind. Außerdem ist die elektronische Schaltung eng am Lüfter vorsehbar und somit ein gutes Signal-Rausch-Verhältnis erreichbar. Die elektronische Schaltung ist mittels der Haltemitteln am Motorflansch haltbar und daher an einem festen stabilen Teil des Motors befestigbar. Außerdem ist somit eine sehr gute elektrische Masseverbindung gegeben.

Bei einer vorteilhaften Ausgestaltung erstrecken sich die Haltemittel über einen größeren axialen Bereich als die Bremse. Von Vorteil ist dabei, dass die Bremse in axialer Richtung sozusagen überbrückbar ist. Bei Wartung oder Reparatur der Bremse bleibt die elektronische Schaltung oder zumindest ihre Justierung relativ zum Lüfter unbeeinflusst.

Bei einer vorteilhaften Ausgestaltung ist die elektronische Schaltung mit einem Halteblech lösbar verbunden, das mit den Haltemitteln verbunden ist. Von Vorteil ist dabei, dass das Halteblech nicht nur die Stabilität sondern auch die magnetische Abschirmung gegen Störfelder aus der Bremse oder aus dem Stator des Motors verbessert.

Bei einer vorteilhaften Ausgestaltung sind die Haltemittel in den Motorflansch eingeschraubt vorgesehen, insbesondere wobei die Haltemittel als Stegbolzen ausgeführt sind. Von Vorteil ist dabei, dass einfache kostengünstige Mittel verwendbar sind.

Erfindungsgemäß umfasst die elektronische Schaltung Sensoren, die das von den Dauermagneten erzeugte Magnetfeld detektieren. Von Vorteil ist dabei, dass die elektronische Schaltung schon mit Auswerteelektronik ausführbar ist, die die Sensorsignale verarbeitbar und auswertbar macht. Somit ist eine winkelbezogene Messwerterfassung, wie beispielsweise Bestimmung der Winkellage und/oder der Anzahl von Umdrehungen, ausführbar.

Bei einer vorteilhaften Ausgestaltung sind Mittel zur Bestimmung der Winkellage und/oder der Anzahl von Umdrehungen des Lüfters vorgesehen, insbesondere sind sie von der elektronischen Schaltung umfasst oder im Anschlusskasten des Motors vorgesehen. insbesondere sind die Mittel zur Bestimmung aus dem vorbeidrehenden Magneten versorgbar, insbesondere umfassen sie Wiegandsensoren und/oder elektronische Schaltung in FRAM Technik. Von Vorteil ist dabei, dass die Magnete durch ihre Nähe an der Oberfläche des Lüfters derart starke Magnetfelder im Bereich der Wiegandsensoren erzeugen, dass aus diesen heraus die elektronische Schaltung samt in FRAM-Technik ausgeführte Auswerteelektronik versorgbar ist. Denn die in FRAM Technik ausgeführten Schaltkreise benötigen sehr wenig Energie. Daher genügt der aus den Wiegandsensoren, also Impulsdrahtsensoren, stammende Energiepuls zur Versorgung zumindest eines Umdrehungszählers in der elektronischen Schaltung, der die absolute Umdrehungszahl des Lüfters feststellbar macht.

Bei einer vorteilhaften Ausgestaltung sind die elektrischen Leitungen der elektronischen Schaltung, umfassend die Leitungen zur Herausführung der detektierten Sensorsignale oder die Leitung zur Herausführung der Information über Winkellage und/oder Anzahl von Umdrehungen, in die Bremse geführt und sind mit den die Bremse versorgenden und/oder steuernden Leitungen in den Anschlusskasten geführt. Von Vorteil ist dabei, dass nur eine Ausnehmung in einem gehäusebildenden Teil der Bremse vorzusehen ist, um dann zur Weiterführung der Leitungen gemeinsam mit den Leitungen der Bremse die hierfür sowieso vorgesehenen Ausnehmungen im Motorgehäuse, umfassend Statorgehäuse, Anschlusskasten und/oder Motorflansch zu verwenden.

Bei einer vorteilhaften Ausgestaltung weist der Anschlusskasten des Motors eine Ausnehmung auf zur Durchführung einer Busleitung und/oder der Anschlusskasten eine elektronische Schaltung mit der Funktionalität eines Umrichters, Sanftanlaufgeräts und/oder Motorschalters. Von Vorteil ist dabei, dass die Information über die Winkellage und/oder Anzahl der Umdrehungen an weitere elektronische Geräte übermittelbar ist.

Bei einer vorteilhaften Ausgestaltung versorgt der Umrichter den Motor und umfasst einen Drehzahlregler, dem die Informationen aus der die Sensoren umfassenden elektronischen Schaltung als Istwert zugeführt wird. Von Vorteil ist dabei, dass ein kostengünstiger Winkelsensor zu Steuerung eines Motors verwendbar ist.

Bei einer vorteilhaften Ausgestaltung sind die Magnetisierungsrichtung der Magnete in radialer Richtung vorgesehen, insbesondere wobei nächstbenachbarte Magnete entgegengesetzte Magnetisierungsrichtung aufweisen. Von Vorteil ist dabei, dass die Wiegandsensoren entsprechend radial anordenbar sind und somit der Motor insbesondere in axialer Richtung sehr kompakt ausführbar ist.

Die Erfindung wird nun anhand von Abbildungen näher erläutert:

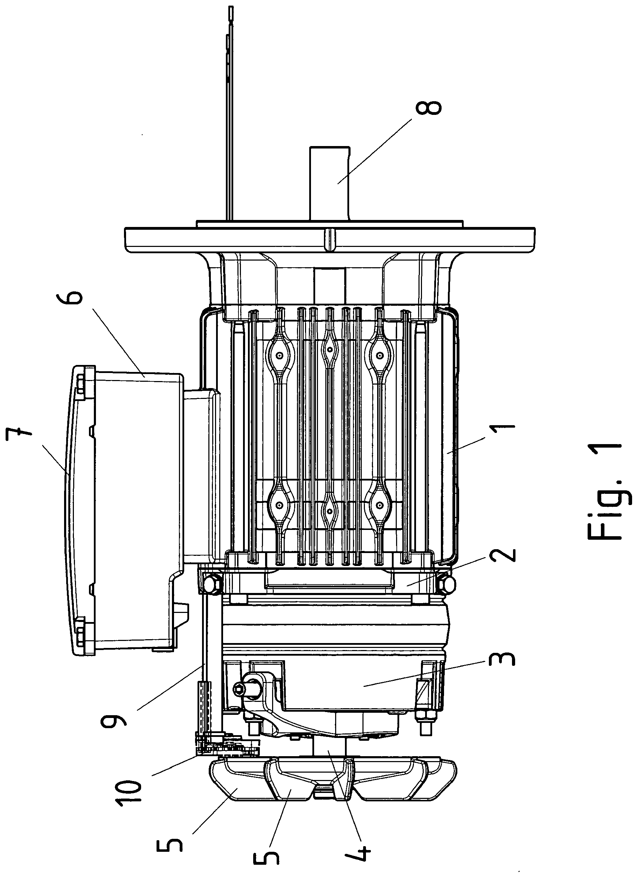

In der Figur 1 ist ein erfindungsgemäßer Elektromotor gezeigt, dessen Statorgehäuse 1 an seinem B-seitigen axialen Endbereich mit dem Motorflansch 2 verbunden ist, an dem eine elektromagnetisch betätigbare Bremse 3 vorgesehen ist. Diese umfasst eine bestrombare Spule, deren bei Bestromung erzeugtes Magnetfeld auf eine Scheibe derart wirkt, dass eine ebenfalls auf die Scheibe wirkende Federkraft eines Federelements überwunden wird und somit die Scheibe axial bewegbar wird. Auf diese Weise werden Bremsbeläge in Reibkontakt bringbar oder alternativ der Reibkontakt trennbar. Die Bremse ist also elektromagnetisch betätigbar. Abhängig von der Bestromung entsteht also ein Magnetfeld in axialer Richtung, das auch veränderlich ist.

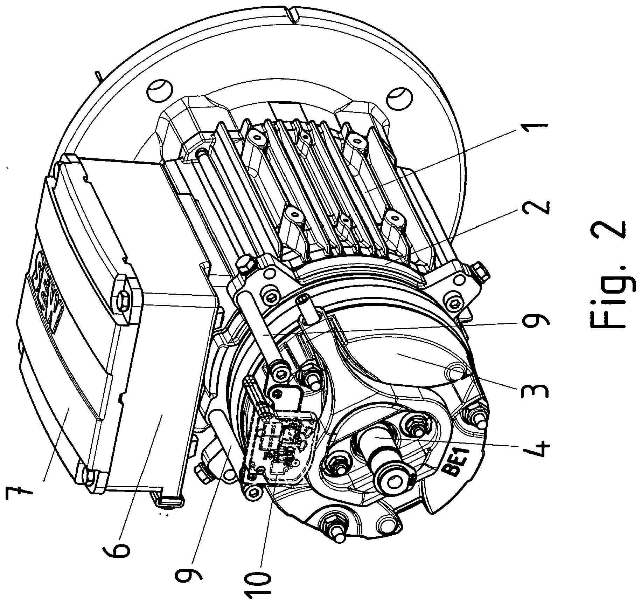

In Figur 2 ist eine Schrägansicht des Motors gezeigt, wobei der Lüfter weggelassen wurde.

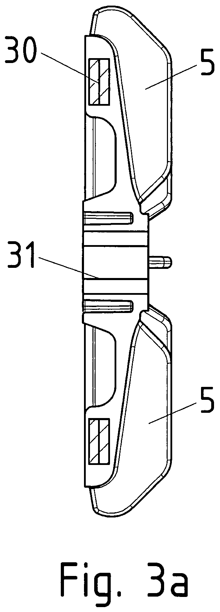

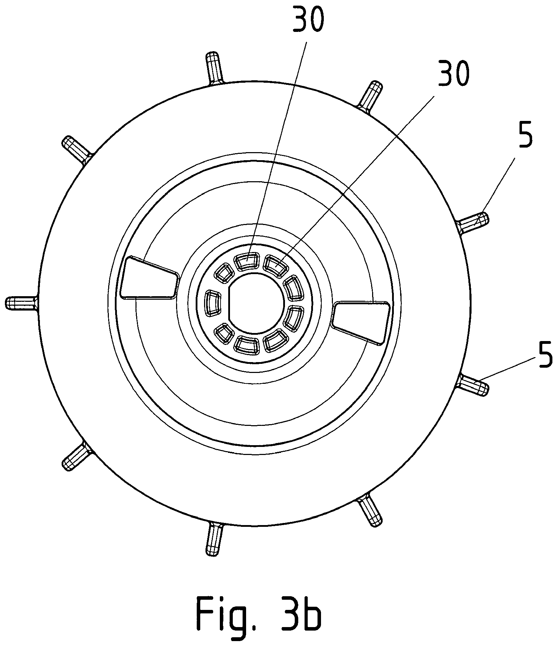

In Figur 3a ist ein Schnitt und in Figur 3b eine Draufsicht des Lüfters gezeigt.

Der Lüfter ist weiter axial als die Bremse abgewandt vom Motor vorgesehen und mit der Motorwelle 4 verbunden, insbesondere kraft- und/oder formschlüssig. Vorzugsweise ist die Verbindung spielfrei ausgeführt.

Mittels der Lüfterflügel 5 wird Luft in axialer Richtung gefördert und der Motor ist durch diese entlang seiner im Statorgehäuse 1 vorgesehenen Rippen kühlbar.

Des Weiteren umfasst der Lüfter in seinem Grundkörper, der kegelstumpfähnlich ausgeführt ist, Dauermagnete 30. Diese sind im Grundkörper beim Kunststoffspritzgießen des Grundkörpers eingebracht und somit vollständig umspritzt. Dabei ist der geringste Abstand zur Oberfläche derart gewählt, dass genügende Haltekräfte für die Magnete 30, insbesondere im Wesentlichen gerade noch genügende Haltekräfte für die Magnete 30, vorgesehen sind.

Die elektronische Schaltung 10 ist umspritzt ausgeführt und von Abstandsbolzen 9 als Haltemittel am Motorflansch gehalten. Dabei erstrecken sich die Abstandsbolzen über den axialen Bereich der Bremse 3 hinweg, so dass die elektronische Schaltung einerseits am Motorflansch 2 gehalten ist und nicht an der Bremse 3. Andererseits ist es ermöglicht, dass die elektronische Schaltung 10 zwischen Lüfter und Bremse 3 vorgesehen. Die elektronische Schaltung 10 umfasst Sensoren zur Detektion der von den Magneten 30 erzeugten Magnetfeldern. Dabei ist ein erster Teil der Magnete 30 in Umfangsrichtung regelmäßig voneinander beabstandet, ein zweiter Teil der Magnete 30 weist zumindest einen anderen Abstand zu einem nächstbenachbarten Magnet auf. Insbesondere besteht der zweite Teil aus einem einzigen Magneten 30. Bei einem anderen erfindungsgemäßen Ausführungsbeispiel sind alle Magnete 30 hingegen regelmäßig voneinander beabstandet.

Die Sensoren sind derart angeordnet und ihre Signale derart ausgewertet, dass eine Information über die Winkellage des Lüfters bestimmbar ist, insbesondere ist ein absoluter Umdrehungszähler integriert ausgeführt.

Da der Abstand zwischen den Magneten 30 und den Sensoren klein vorgesehen ist, insbesondere kleiner als der Abstand zwischen der Spule der Bremse und den Sensoren der elektronischen Schaltung, ist die Fehlerrate beim Erkennen der von den Magneten 30 verursachten Magnetfeldänderung verringert. Denn die Störstrahlung aus der Bremse heraus ist nur gering. Insbesondere umfasst die Bremse selbst ein Gehäuse, das zumindest einen Teil der Magnetfeldlinien ableitet, und somit verringerte Stör-Magnetfelder austreten.

Durch die Umspritzung mit Kunststoff ist die elektronische Schaltung, umfassend die Sensoren und Leiterplatte sowie weitere Bauelemente, nicht nur gut geschützt sondern auch elektrisch gut isoliert gegen ihre Umgebung. Vorzugsweise ragt die Platine aus dem umspritzten Bereich heraus, wodurch eine Schraubverbindung mit den Haltemitteln 9 vorsehbar ist.

Weiterer Vorteil der Haltemittel 9 ist, dass beim Warten der Bremse die Justierung der elektronischen Schaltung, umfassend die Sensoren, relativ zu den Magneten des Lüfters nicht wiederholt werden muss, da der Abstand schon durch die Haltemittel festlegbar ist.

Bei einer vorteilhaften Ausführung ist sogar die Bremse wartbar, während die Haltemittel unverändert mit dem Motorflansch verbunden bleiben, bei einer anderen alternativen vorteilhaften Ausführung werden die Haltemittel abmontiert und nach Wartung der Bremse wieder anmontiert an den Motorflansch. Dabei ist dann die Justierung des Abstandes zwischen Magneten und Sensoren wieder hergestellt.

Bei einem weiteren erfindungsgemäßen Ausführungsbeispiel wird die Leiterplatte der elektronischen Schaltung 10 nicht direkt mittels der Haltemittel am Motorflansch befestigt sondern die elektronische Schaltung wird an einem Halteblech befestigt, das wiederum mit den Haltemitteln verbunden ist. Somit ist die Befestigung der elektronischen Schaltung stabiler und steifer ausgeführt. Das Halteblech ist außerdem derart zwischen Bremse 3 und elektronischer Schaltung 10 anordenbar und das Material des Haltebleches derart wählbar, dass die Sensoren mittels des Haltebleches gegen aus der Bremse austretende Magnetfeldlinien abgeschirmt werden.

Der Lüfter ist auf der Motorwelle mittels seiner Wellenaufnahme 31 kraft- und/oder formschlüssig verbunden.

Auf dem Statorflansch ist ein Anschlusskastenunterteil 6 vorgesehen, auf dem ein Anschlusskastendeckel 7 vorgesehen ist.

Das abtriebsseitige Ende der Motorwelle ragt aus dem Motor A-seitig heraus und ist mit dem Bezugszeichen 8 in der Figur 1 versehen.

### Bezugszeichenliste

1 Statorgehäuse
2 Motorflansch
3 Bremse, elektromagnetisch betätigbar
4 Motorwelle
5 Lüfterflügel
6 Anschlusskastenunterteil
7 Anschlusskastendeckel
8 Motorwelle
9 Abstandsbolzen als Haltemittel
10 umspritzte elektronische Schaltung
31 Wellenaufnahme
30 Dauermagnete

## Patentansprüche

1. Elektromotor, umfassend eine Bremse (3) und einen Lüfter,
wobei der Lüfter, umfassend Grundkörper und darauf vorgesehene Lüfterflügel (5), einstückig als Spritzgussteil ausgeführt ist und im Lüfter Dauermagnete (30) umspritzt vorgesehen sind,
wobei der Grundkörper kegelstumpfähnlich ausgeführt ist,
wobei der Lüfter in seinem Grundkörper die Dauermagnete (30) aufweist,
wobei die Dauermagnete (30) in den Grundkörper beim Kunststoffspritzgießen des Grundkörpers eingebracht und vollständig umspritzt sind,
wobei der geringste Abstand zur Oberfläche derart gewählt ist, dass genügende Haltekräfte für die Dauermagnete (30) vorgesehen sind,
wobei axial beabstandet vom Lüfter eine elektronische Schaltung (10) vorgesehen ist, die Sensoren umfasst welche in Wirkverbindung mit den Magneten stehen, wobei die Sensoren das Magnetfeld der sich vorbei bewegenden Magnete detektieren,
wobei der Lüfter auf der Motorwelle mittels seiner Wellenaufnahme (31) kraft- und/oder formschlüssig verbunden ist,
wobei die Dauermagnete (30) derart nahe an der Oberfläche des Grundkörpers angeordnet sind, dass die Magnete im Grundkörper auch beim Betreiben des Motors gehalten sind.

2. Elektromotor nach Anspruch 1,
**dadurch gekennzeichnet, dass**
die elektronische Schaltung (10) mittels Haltemitteln am Motorflansch (2) befestigt ist, der mit dem Statorgehäuse (1) des Motors verbunden ist.

3. Elektromotor nach Anspruch 2,
**dadurch gekennzeichnet, dass**
die Haltemittel sich über einen größeren axialen Bereich als die Bremse (3) erstrecken.

4. Elektromotor nach Anspruch 2 oder 3,
**dadurch gekennzeichnet, dass**
die elektronische Schaltung (10) mit einem Halteblech lösbar verbunden ist, das mit den Haltemitteln verbunden ist.

5. Elektromotor nach **Anspruch 2**,
**dadurch gekennzeichnet, dass**
dass die Haltemittel in den Motorflansch (2) eingeschraubt vorgesehen sind, insbesondere wobei die Haltemittel als Stegbolzen ausgeführt sind.

6. Elektromotor nach einem der vorangegangenen Ansprüche,
**dadurch gekennzeichnet, dass**
Mittel zur Bestimmung der Winkellage und/oder der Anzahl von Umdrehungen des Lüfters vorgesehen sind, insbesondere die von der elektronischen Schaltung (10) umfasst sind oder im Anschlusskasten des Motors vorgesehen sind.

7. Elektromotor nach Anspruch 6,
**dadurch gekennzeichnet, dass**
die Mittel zur Bestimmung der Winkellage aus dem vorbeidrehenden Magneten versorgbar sind, insbesondere Wiegandsensoren umfassen und/oder die elektronische Schaltung (10) in FRAM Technik ausgeführt ist.

8. Elektromotor nach einem der vorangegangenen Ansprüche,
**dadurch gekennzeichnet, dass**
die elektrischen Leitungen der elektronischen Schaltung (10), umfassend die Leitungen zur Herausführung der detektierten Sensorsignale oder die Leitung zur Herausführung der Information über Winkellage und/oder Anzahl von Umdrehungen, in die Bremse (3) geführt sind und mit den die Bremse (3) versorgenden und/oder steuernden Leitungen in den Anschlusskasten geführt sind.

9. Elektromotor nach einem der vorangegangenen Ansprüche,
**dadurch gekennzeichnet, dass**
der Anschlusskasten des Motors eine Ausnehmung aufweist zur Durchführung einer Busleitung und/oder der Anschlusskasten eine elektronische Schaltung (10) mit der Funktionalität eines Umrichters umfasst.

10. Elektromotor **nach Anspruch 9**,
**dadurch gekennzeichnet, dass**
der Umrichter den Motor versorgt und einen Drehzahlregler umfasst, dem die Informationen aus der die Sensoren umfassenden elektronischen Schaltung (10) als Istwert zugeführt wird.

11. Elektromotor nach einem der vorangegangenen Ansprüche,
**dadurch gekennzeichnet, dass**
die Magnetisierungsrichtung der Magnete in radialer Richtung vorgesehen sind, insbesondere wobei nächstbenachbarte Magnete entgegengesetzte Magnetisierungsrichtung aufweisen.

## Claims

1. Electric motor, comprising a brake (3) and a fan,
wherein the fan, comprising a main body and fan blades (5) provided thereon, is constructed in one piece as an injection-moulded part and permanent magnets (30) are provided in the fan in an overmoulded manner,
wherein the main body is constructed in a manner similar to a truncated cone,
wherein the fan has the permanent magnets (30) in its main body,
wherein the permanent magnets (30) are incorporated in the main body during the plastic injection moulding of the main body and are completely overmoulded,
wherein the smallest distance from the surface is selected such that sufficient retaining forces are provided for the permanent magnets (30),
wherein an electronic circuit (10) is provided at an axial distance from the fan, said electronic circuit comprising sensors which are operatively connected to the magnets, wherein the sensors detect the magnetic field of the magnets moving past,
wherein the fan is connected to the motor shaft in a force-fitting and/or form-fitting manner by means of its shaft inlet (31),
wherein the permanent magnets (30) are arranged close to the surface of the main body such that the magnets are retained in the main body even during operation of the motor.

2. Electric motor according to claim 1,
**characterized in that**
the electronic circuit (10) is fastened to the motor flange (2) by means of retaining means, said motor flange being connected to the stator housing (1) of the motor.

3. Electric motor according to claim 2,
**characterized in that**
the retaining means extend over a larger axial area than the brake (3).

4. Electric motor according to claim 2 or 3,
**characterized in that**
the electronic circuit (10) is detachably connected to a retaining plate, which is connected to the retaining means.

5. Electric motor according to claim 2,
**characterized in that**
**in that** the retaining means are provided in a manner screwed into the motor flange (2), in particular wherein the retaining means are constructed as stud bolts.

6. Electric motor according to one of the preceding claims,
**characterized in that**
means for determining the angle position and/or the number of revolutions of the fan are provided, said means in particular being encompassed by the electronic circuit (10) or being provided in the terminal box of the motor.

7. Electric motor according to claim 6,
**characterized in that**
the means for determining the angle position can be supplied from the magnets rotating past, in particular comprise Wiegand sensors, and/or the electronic circuit (10) is constructed in FRAM technology.

8. Electric motor according to one of the preceding claims,
**characterized in that**
the electrical lines of the electronic circuit (10), comprising the lines for the outward passage of the detected sensor signals or the line for the outward passage of the information concerning the angle position and/or number of revolutions, are guided into the brake (3) and are guided into the terminal box with the lines that supply and/or control the brake (3).

9. Electric motor according to one of the preceding claims,
**characterized in that**
the terminal box of the motor has a recess for the passage of a bus line and/or the terminal box comprises an electronic circuit (10) having the functionality of a converter.

10. Electric motor according to claim 9,
**characterized in that**
the converter supplies the motor and comprises a rotational speed controller, to which the information from the electronic circuit (10) comprising the sensors is fed as an actual value.

11. Electric motor according to one of the preceding claims,
**characterized in that**
the magnetization direction of the magnets are provided in the radial direction, in particular wherein nearest-adjacent magnets have opposite magnetization direction.

## Revendications

1. Moteur électrique, comprenant un frein (3) et un ventilateur,
sachant que le ventilateur, comprenant un corps de base et des ailettes de ventilateur (5) prévues sur ce corps, est réalisé d'un seul tenant sous la forme d'une pièce moulée par injection, et que des aimants permanents (30) sont prévus dans le ventilateur en étant enrobés par injection,
sachant que le corps de base est réalisé à la manière d'un tronc de cône,
sachant que le ventilateur présente les aimants permanents (30) dans son corps de base,
sachant que les aimants permanents (30) sont introduits dans le corps de base lors du moulage par injection de matière plastique et sont entièrement enrobés par injection,
sachant que la distance minimale par rapport à la surface est choisie de telle sorte que des forces de maintien suffisantes sont prévues pour les aimants permanents (30),
sachant qu'un montage électronique (10) est prévu à distance axiale du ventilateur, montage qui comprend des capteurs qui se trouvent en liaison fonctionnelle avec les aimants, sachant que les capteurs détectent le champ magnétique des aimants qui se déplacent devant eux,
sachant que le ventilateur est assemblé à force et/ou par complémentarité de forme sur l'arbre de moteur au moyen de son logement d'arbre (31),
sachant que les aimants permanents (30) sont disposés à proximité de la surface du corps de base de telle sorte que les aimants sont maintenus dans le corps de base même pendant le fonctionnement du moteur.

2. Moteur électrique selon la revendication 1, **caractérisé en ce que** le montage électronique (10) est fixé à l'aide de moyens de maintien sur le flasque de moteur (2) qui est assemblé à la carcasse de stator (1) du moteur.

3. Moteur électrique selon la revendication 2, **caractérisé en ce que** les moyens de maintien s'étendent sur une plus grande plage axiale que le frein (3).

4. Moteur électrique selon la revendication 2 ou 3, **caractérisé en ce que** le montage électronique (10) est assemblé de manière amovible à une tôle de maintien qui est assemblée aux moyens de maintien.

5. Moteur électrique selon la revendication 2, **caractérisé en ce que** les moyens de maintien sont prévus vissés dans le flasque de moteur (2), sachant en particulier que les moyens de maintien sont réalisés sous la forme de boulon nervurés.

6. Moteur électrique selon l'une des revendications précédentes, **caractérisé en ce qu'**il est prévu des moyens pour déterminer la position angulaire et/ou le nombre de révolutions du ventilateur, en particulier qui sont compris dans le montage électronique (10) ou sont prévus dans le boîtier de raccordement du moteur.

7. Moteur électrique selon la revendication 6, **caractérisé en ce que** les moyens pour déterminer la position angulaire peuvent être alimentés à partir des aimants qui tournent devant eux, en particulier comprennent des capteurs Wiegand, et/ou le montage électronique (10) est réalisé en technique FRAM.

8. Moteur électrique selon l'une des revendications précédentes, **caractérisé en ce que** les lignes électriques du montage électronique (10), comprenant les lignes pour évacuer les signaux de capteurs détectés ou la ligne pour évacuer l'information sur la position angulaire et/ou le nombre de révolutions, sont dirigées dans le frein (3) et sont dirigées dans le boîtier de raccordement avec les lignes alimentant et/ou commandant le frein (3).

9. Moteur électrique selon l'une des revendications précédentes, **caractérisé en ce que** le boîtier de raccordement du moteur présente un évidement afin de réaliser une ligne de bus, et/ou le boîtier de raccordement comprend un montage électronique (10) ayant la fonctionnalité d'un convertisseur.

10. Moteur électrique selon la revendication 9, **caractérisé en ce que** le convertisseur alimente le moteur et comprend un régulateur de vitesse de rotation auquel sont apportées comme valeur effective les informations provenant du montage électronique (10) comprenant les capteurs.

11. Moteur électrique selon l'une des revendications précédentes, **caractérisé en ce que** les sens de magnétisation des aimants sont prévus en direction radiale, sachant en particulier que des aimants immédiatement voisins présentent des sens de magnétisation opposés.
